Europäisches Patentamt

European Patent Office

Office européen des brevets

(11) Veröffentlichungsnummer: **0 197 176**
**B1**

# EUROPÄISCHE PATENTSCHRIFT

(45) Veröffentlichungstag der Patentschrift:
**22.06.88**

(51) Int. Cl.⁴: **C 04 B 35/52**

(21) Anmeldenummer: **85104322.4**

(22) Anmeldetag: **10.04.85**

(54) Verfahren zum Herstellen von Glaskohlenstoffkörpern.

(43) Veröffentlichungstag der Anmeldung:
**15.10.86 Patentblatt 86/42**

(45) Bekanntmachung des Hinweises auf die Patenterteilung:
**22.06.88 Patentblatt 88/25**

(84) Benannte Vertragsstaaten:
**DE FR GB IT SE**

(56) Entgegenhaltungen:
**DE - A - 2 829 234**
**DE - B - 2 325 163**
**GB - A - 921 236**
**GB - A - 956 452**
**GB - A - 1 312 258**
**US - A - 4 241 104**
**US - A - 4 412 675**

(73) Patentinhaber: **SIGRI GmbH,**
**Werner-von-Siemens-Strasse 18, D-8901 Meitingen (DE)**

(72) Erfinder: **Tetzlaff, Ernst, Prof. Dr. Ing., Virchowstrasse 2,**
**D-7920 Heidenheim (DE)**

## Beschreibung

Die Erfindung betrifft ein Verfahren zum Herstellen von Glaskohlenstoffkörpern aus Thermoplasten, die vor dem Carbonisieren in eine thermisch beständige Form übergeführt werden.

Zur Herstellung von Kohlenstoff- und Graphitkörpern werden im allgemeinen gemahlene Kokse oder andere im wesentlichen aus Kohlenstoff bestehende Feststoffe mit einem kohlenstoffhaltigen Binder gemischt, das Gemisch wird geformt und der Formling zur Überführung des Binders in einen die Kohlenstoffkörner verbindenden Koks erhitzt. Die Körper sind polygranular, in der Regel anisotrop und als Folge der Binderpyrolyse mehr oder weniger porös. Es hat nicht an Versuchen gefehlt, gleichförmigere, im wesentlichen nur eine einzige Phase enthaltende Körper herzustellen. Beispielsweise ist vorgeschlagen worden, duroplastische Kunststoffe zu härten und zu carbonisieren, das Produkt zu zerkleinern, mit einem Phenolharzbinder zu mischen und wie üblich zu einem Kohlenstoffkörper zu verarbeiten. Trotz des grösseren Aufwands bleibt bei diesem Verfahren die zweiphasige Struktur des Kohlenstoffkörpers, gekennzeichnet durch den primären Harzkoks und den sekundären Binderkoks, im wesentlichen erhalten. Einen «monogranularen» Kohlenstoffkörper erhält man aus duroplastischen Kunststoffen, die zu Formlingen verarbeitet und nach thermischer oder katalytischer Härtung, durch Erhitzen auf etwa 1000°C carbonisiert werden. Das Produkt, das eine grössere Festigkeit als «polygranularer» Kohlenstoff hat und im wesentlichen gegen Gase und Flüssigkeiten impermeabel ist, wird wegen der glasähnlichen Bruchflächen als Glaskohlenstoff oder glasartiger Kohlenstoff bezeichnet. Grundsätzlich ist jeder duroplastische Kunststoff als Ausgangsstoff für Glaskohlenstoff geeignet, verwendet werden überwiegend Phenolharze (GB-PS 956 452), Furanharze (GB-PS 921 236) und Gemische dieser Stoffe in flüssiger oder pulveriger Form. Zur Herstellung der Formlinge werden Flüssigharze in Formen gegossen, pulverförmige Harze durch Gesenkpressen, vorwiegend Warmpressen, geformt und die Harze durch allmähliche Steigerung der Temperatur ausgehärtet. Unter dem Begriff «Härtung» versteht man alle Kondensations- und Vernetzungsaktionen, die den Harzkörper unschmelzbar machen, so dass die Körper in einer zweiten Verfahrensstufe ohne grössere Formänderungen in Kohlenstoff übergeführt werden können. Man erhitzt die gehärteten Formlinge zu diesem Zweck in einer inerten oder reduzierenden Atmosphäre oder im Vakuum auf etwa 800°C oder mehr. Erhitzungsgeschwindigkeit und maximale Erhitzungstemperatur hängen im wesentlichen von Grösse und Wandstärke der Formlinge und von der vorgesehenen Verwendung des Glaskohlenstoffs ab. Üblich sind Geschwindigkeiten von etwa 1 bis 5 K/h unterhalb etwa 600°C und von etwa 30 K/h oberhalb dieser Grenztemperatur. Die maximale Erhitzungstemperatur beträgt zweckmässig etwa 1000°C, bzw. etwa 2800°C für «graphitierten» Glaskohlenstoff.

Ein gewichtiger Nachteil der beschriebenen Herstellung von Glaskohlenstoffkörpern ist die verglichen mit thermoplastischen Kunststoffen schlechte Formbarkeit duroplastischer Harze. Die Formungsverfahren sind vergleichsweise aufwendig und auch kaum zur Herstellung gestreckter Körper geeignet, z.B. von Rohren, Leisten und dergleichen. Zwar ist es bekannt, körnige und faserige Füllstoffe enthaltende duroplastische Massen zu extrudieren und langgestreckte Formlinge herzustellen, dieses Verfahren ist jedoch weniger für die Verarbeitung ungefüllter Harztypen geeignet. Die technisch kaum beherrschbare Streuung der Fluidität beim Extrudieren ungefüllter Duroplaste bedingt grosse Massabweichungen und führt vor allem zu einem grossen Ausschussanteil durch die Bildung von Rissen, die in der Carbonisierungsstufe gebildet werden.

Es wurde ferner bereits vorgeschlagen, aromatische Gruppen enthaltende thermoplastische Kunststoffe zu Körpern zu formen und diese einer ionisierenden Strahlung auszusetzen. Dabei werden in den Thermoplasten den Körper thermisch stabilisierende Vernetzungsreaktionen ausgelöst. Man kann dann die bestrahlten Körper wie Duroplastkörper durch einfaches Erhitzen carbonisieren. Ein grosser Vorteil des Verfahrens ist die Nutzung der vergleichsweise günstigen Formbarkeit der thermoplastischen Ausgangsstoffe, die besonders die Herstellung langgestreckter Körper, z.B. durch Extrudieren erleichtert oder erst ermöglicht. Als ionisierende Strahlung verwendet man bei diesem Verfahren bevorzugt Beta-Strahlen, deren Tiefendosisverteilung u.a. von der Strahlspannung abhängt. Bei einer gegebenen Strahlspannung ergibt sich entsprechend über die Wanddicke eines bestrahlten Körpers ein Dosisprofil und ein ortsabhängiger Vernetzungsgrad. Da zudem die angebotene Strahlungsintensität eine Funktion der Neigung der Körperflächen gegen die Richtung des Elektronenstrahls ist, kann eine angenähert konstante Dosis nur durch einen Ausgleich der Flächenneigungen etwa durch Änderung der Bestrahlungszeit proportional zur Neigung der bestrahlten Fläche oder Einstellung einer konstanten Neigung über einen konstanten Zeitraum für alle Flächen durch Drehen des Körpers erzielt werden. Besonders für komplizierter geformte Körper sind diese Bedingungen nur mit grossem technischen Aufwand zu erfüllen. In der Regel ist die absorbierte Strahlungsdosis daher keine Konstante und der Vernetzungsgrad benachbarter Volumenelemente ist mehr oder weniger verschieden. Die Pyrolysereaktionen bei der Carbonisierung des stabilisierten Körpers sind entsprechend ebenfalls vom geometrischen Ort abhängig, es bilden sich Zonen verschiedener Dichte und Porenverteilung, die Körper verformen sich beim Carbonisieren mehr oder weniger stark und häufig entstehen Risse und andere Strukturfehler, die die Brauchbarkeit der erzeugten Glaskohlenstoffkörper doch erheblich beschränken.

Der Erfindung liegt entsprechend die Aufgabe zugrunde, das Verfahren zur Herstellung von Glaskohlenstoffkörpern aus thermoplastischen Kunststoffen derart zu modifizieren, dass unabhängig von Form und Grösse der Körper, die zur thermischen Stabilisierung der Körper aufgewendete Bestrahlungsdosis über das Körpervolumen konstant ist oder nur in einem das Carbonisierungsverhalten und die Eigenschaften des Glaskohlenstoffs nicht beeinträchtigenden Mass streut.

Die Aufgabe wird mit einem Verfahren der eingangs genannten Art dadurch gelöst, dass aromatische Gruppen enthaltende thermoplastische Kunststoffe in Form von Pulver oder Granulat durch Bestrahlung mit ionisierenden Strahlen thermisch stabilisiert, das thermisch stabilisierte Gut zu Körpern geformt und diese durch Erhitzen in inerter Atmosphäre carbonisiert werden.

Die Erfindung beruht auf der überraschenden Kenntnis, dass aromatische Gruppen enthaltende thermoplastische Kunststoffe nach ihrer thermischen Stabilisierung durch ionisierende Strahlen noch formbar sind und mit Hilfe der in der Kunststofftechnik üblichen Verfahren, wie Extrudieren, Walzen, Gesenkpressen, Stritzgiessen, zu Formlingen mannigfaltiger Form und Grösse verarbeitet werden können. Trotz der Formbarkeit sind die aus den bestrahlten Thermoplasten hergestellten Körper thermisch stabil, d.h. durch die Bestrahlung werden aktivierte Zentren geschaffen, die oberhalb der üblichen Formungstemperatur Vernetzungsreaktionen auslösen, so dass die stabilisierten Formlinge bei der Carbonisierungsbehandlung nicht schmelzen und sich nicht verformen, ausgenommen die normale Schwindung. Für das Verfahren geeignet sind alle thermoplastischen Kunststoffe, die aromatische Strukturanteile (Benzolringe) enthalten, wie aromatische Polyester, Polycarbonate, Polyterephthalate, Polyarylate, Polyaryl-oxide, -sulfide und -sulfone, Polyaryletherketone, Gemische dieser Stoffe und Modifikationen. Bevorzugt werden Thermoplaste aus der Gruppe Polyphenylenoxid, Polyetheretherketon, Polysulfon und Polyethersulfon, die sich durch eine vergleichsweise grosse Koksausbeute von etwa 50% auszeichnen. Besonders günstig verhält sich Polysulfon. Die thermoplastischen Kunststoffe werden in Form von Granulat oder Pulver zu ihrer thermischen Stabilisierung ionisierender Strahlung ausgesetzt. Eine über das Partikelvolumen nur unwesentlich streuende Strahlendosis wird dadurch erreicht, dass der Durchmesser der Granulat- bzw. Pulverkörner kleiner als 5 mm ist, die Varianz des Durchmessers klein ist, vorzugsweise 30% nicht übersteigt und die Partikel bei der Bestrahlung umgewälzt werden. Der bekannte Abfall der Bestrahlungsdosis mit der Eindringtiefe wird durch die Begrenzung des Partikeldurchmessers und der Durchmesserstreuung wesentlich vermindert und der Einfluss der geometrischen Zuordnung von Strahlenquellen und bestrahlter Fläche wird durch Umwälzen der Pulver- bzw. Granulatschüttung ausgeschaltet. Dabei ist es nicht nötig das Pulver oder Granulat während der Dauer der Bestrahlung ständig in Bewegung zu halten, etwa in einem Fliessbett, es reicht aus, die Pulver- oder Granulatschüttung intermittierend durch Rühren, Schütteln oder dgl. neu zu verteilen.

Zur Bestrahlung der Schüttung geeignet sind UV-, Beta-, Gamma- und Neutronenstrahlen, bevorzugt werden wegen der guten Wirkung und der einfachen Handhabung Beta-Strahlen. Die Bestrahlungsdosis ist derart zu bemessen, dass durch Vernetzungsreaktionen eine hinreichende Formstabilität beim Carbonisieren erreicht wird und zugleich eine ausreichende Formbarkeit des Pulvers oder Granulats erhalten bleibt. Den günstigsten Dosisbereich kann man durch einfache Pressversuche ermitteln. Dabei werden mit verschiedenen Dosen bestrahlte Granulatproben gepresst und das Fliessverhalten bestimmt. Eine andere einfache Methode ist das Lösen des bestrahlten Thermoplasten in Lösemitteln, z.B. Polysulfon in Dimethylformamid. Der bestrahlte Thermoplast sollte sich bei diesem Versuch zum überwiegenden Teil lösen oder stark quellen. Eine ausreichende Formbarkeit in Kombination mit thermischer Stabilität wird erreicht mit Bestrahlungsdosen von 0,3 bis 2 MJ/kg. Bei kleineren Dosen reicht die thermische Stabilisierung oftmals nicht aus, bei grösseren Dosen ist das Fliessvermögen des Thermoplasten in der Regel schlecht. Bevorzugt werden Bestrahlungsdosen zwischen 0,5 bis 1,5 MJ/kg. Zur Vermeidung eines übermässigen Temperaturanstiegs während der Bestrahlung in der Pulver- oder Granulatschüttung ist es dabei von Vorteil, die Dosis in mehreren Teilschritten aufzubringen und dazwischen die Schüttung abzukühlen. Die Zwischenphasen können zweckmässig zur Umwälzung der Schüttung genutzt werden, die Dosis je Teilschritt sollte etwa 0,05 bis 0,1 MJ/kg betragen.

Aus dem bestrahlten, nunmehr thermisch stabilisierten Kunststoff werden mit Hilfe der als Urformen bezeichneten Formverfahren Körper geformt. Grössere Formate und kompliziertere Formen setzt man zweckmässig aus kleineren bzw. einfacheren Teilen zusammen, die beispielsweise durch Kleben, Warmgasschweissen und besonders durch Ultraschall- oder Vibrationsschweissen miteinander verbunden werden. Temperaturen und Pressdrücke für Formen und Fügen sind nicht wesentlich verschieden von den bei der Verarbeitung unbestrahlter Kunststoffe verwendeten Parametern, die in den meisten Fällen direkt übernommen werden können. Der pressfertigen Mischung aus bestrahltem Pulver oder Granulat kann ein Füll- oder Verstärkungsstoff zugesetzt werden, wie Russ, Graphitpulver und vor allem Kohlenstoff-Kurzschnittfasern, so weit es die Fliessfähigkeit der Pressmasse zulässt oder man verwendet in an sich bekannter Weise gefüllte, besonders mit Kohlenstoffasern gefüllte Granulate, die wie oben beschrieben mit ionisierender Strahlung bestrahlt und zu Körpern mannigfacher Gestalt geformt werden. Die aus den thermisch stabilisierten Kunststoffen gebildeten Formlinge werden in an sich bekannter Weise durch Erhitzen in einer inerten oder reduzierenden Atmosphäre oder im Vakuum carbonisiert. Die Erhitzungsgeschwindigkeit beträgt zweckmässig unterhalb 600°C etwa 3 bis 8 K/h, oberhalb 600°C sind grössere Aufheizraten möglich. Allgemein ist die Rate für dickwandige Körper kleiner als für dünnwandige. Die maximale Erhitzungstemperatur sollte wenigstens 800°C betragen.

Der wesentliche Vorteil des erfindungsgemässen Verfahrens besteht darin, dass das durch Bestrahlung von Pulver- oder Granulatschüttungen hergestellte Ausgangsmaterial einen konstanten oder nur geringfügig unterschiedlichen Vernetzungsgrad hat, bzw. gleichmässig thermisch stabilisiert ist, und aus den Schüttungen hergestellte Formlinge entsprechend über das gesamte Volumen eine konstante oder nur geringfügig streuende Strahlungsdosis aufweisen. Beim Erwärmen und Carbonisieren der Formlinge gibt es daher keine Verformungen und keine Spannungsbrüche, die die Verwendung der Körper beeinträchtigen oder gar ausschliessen. Werden thermoplastische Kunststoffe zunächst geformt und die Formlinge durch Bestrahlung thermisch stabilisiert, erhält man ähnliche fehlerlose Glaskohlenstoffkörper nur aus geometrisch einfachen und dünnwandigen Formen, z.B. Platten, Rohre. Das erfindungsgemässe Verfahren ist daher von besonderem Vorteil für die Herstellung dickwandiger Glaskohlenstoffkörper und von Körpern mit komplizierter Gestalt.

Die Erfindung wird im folgenden anhand von Beispielen beschrieben.

*Beispiel 1*

Handelsübliches Polysulfon-Granulat (Ultrason 2000) mit einer mittleren Korngrösse von 2,5 mm, einem Maximalkorn von 3,0 und einem Minimalkorn von 2,0 mm wurde in einer ebenen Schüttung mit einer mittleren Dicke von etwa 5 mm mit Beta-Strahlung bestrahlt. Die Gesamtdosis, die in Schritten von 0,1 MJ/kg aufgebracht wurde, betrug 0,4 bis 1,6 MJ/kg. Nach jeder Bestrahlungsstufe wurde die Schüttung durch kräftiges Rühren umgewälzt. Das bestrahlte Granulat wurde auf einer Spritzgussmaschine zu Plättchen $100 \times 50 \times 4,4$ mm$^3$ verarbeitet. Die Massetemperatur betrug dabei ca. 350°C, die Werkzeugtemperatur etwa 170°C. Zum Carbonisieren wurden die Plättchen dann in Stickstoffatmosphäre mit einem Gradienten von 5 K/h auf 550°C und mit einem Gradienten von 30 K/h auf ca. 950°C erhitzt und nach einer Verweilzeit von 60 min auf Raumtemperatur abgekühlt.

| Dosis | Formbarkeit | Koksrückstand | Formhaltigkeit |
|---|---|---|---|
| 0,4 MJ/kg | sehr gut | 42% | befriedigend |
| 0,6 | gut | 43 | gut |
| 0,8 | gut | 43 | gut |
| 1,0 | gut | 43 | gut |
| 1,2 | gut | 44 | gut |
| 1,4 | gut | 43 | gut |
| 1,6 | befriedigend | 45 | befriedigend |

Die nach Augenschein fehlerfreien Glaskohlenstoffplatten hatten bei Raumtemperatur folgende Eigenschaften:

| | | |
|---|---|---|
| Rohdichte | – | 1,47 bis 1,50 g/cm³ |
| Biegefestigkeit | – | 90 bis 120 MPa |
| E-Modul | – | 27 bis 30 GPa |
| spez. elektr. Widerstand | – | 48 bis 50 Ωµm |

*Beispiel 2*

Polyethersulfon-Granulat (Vitrex 300 P), Korngrösse 2,5 bis 3,0 mm, in das ca. 10% Kohlenstoffasern mit einer Faserlänge von 0,8 bis 2mm eingearbeitet waren, wurde wie im Beispiel 1 bestrahlt. Die Gesamtdosis betrug ca. 0,9 MJ/kg. Aus dem bestrahlten Gut wurden durch Extrudieren Stäbe mit quadratischem Querschnitt ($20 \times 20$ mm$^2$) geformt, einige der Stäbe durch Ultraschallschweissen miteinander verbunden und die Stäbe durch Erhitzen auf 600°C mit einem Gradienten von 6 K/h und auf 1000°C mit einem Gradienten von 25 K/h in Argonatmosphäre erhitzt. Die Formbarkeit des Granulats und die Formbeständigkeit der Stäbe beim Carbonisieren waren gut, bei Raumtemperatur hatten die Glaskohlenstoffstäbe folgende Eigenschaften:

| | | |
|---|---|---|
| Rohdichte | – | 1,40 bis 1,42 g/cm³ |
| Biegefestigkeit | – | 130 bis 140 MPa |
| E-Modul | – | 28 bis 32 GPa |
| spez. elektr. Widerstand | – | 53 bis 55 Ωµm |

Die miteinander verschweissten Stäbe unterscheiden sich nicht von den einstückigen Proben.

**Patentansprüche**

1. Verfahren zum Herstellen von Glaskohlenstoffkörpern aus Thermoplasten die vor dem Carbonisieren in eine thermisch beständige Form übergeführt werden, dadurch gekennzeichnet, dass aromatische Gruppen enthaltende thermoplastische Kunststoffe in Form von Pulver- oder Granulatschüttungen durch Bestrahlung mit einer ionisierenden Strahlung thermisch stabilisiert, das bestrahlte Gut zu Körpern geformt und die Körper durch Erhitzen in einer inerten Atmosphäre carbonisiert werden.

2. Verfahren nach Patentanspruch 1, dadurch gekennzeichnet, dass ein Thermoplast aus der Gruppe Polyphenylenoxid, Polysulfon, Polyethersulfon, Polyetheretherketon verwendet wird.

3. Verfahren nach den Patentansprüchen 1 und 2, dadurch gekennzeichnet, dass Granulatkörner mit einem Durchmesser von höchstens 5 mm und einer Varianz des Durchmessers von höchstens 30% verwendet werden.

4. Verfahren nach den Patentansprüchen 1 bis 3, dadurch gekennzeichnet, dass die Schüttung umgewälzt wird.

5. Verfahren nach den Patentansprüchen 1 bis 4, dadurch gekennzeichnet, dass die Pulver- oder Granulatschüttung mit Beta-Strahlen bestrahlt wird.

6. Verfahren nach den Patentansprüchen 1 bis 5, dadurch gekennzeichnet, dass die Pulver- oder Granulatschüttung mit einer Dosis von 0,5 bis 1,5 MJ/kg bestrahlt wird.

7. Verfahren nach den Patentansprüchen 1 bis 6, dadurch gekennzeichnet, dass die Bestrahlungsdosis stufenweise aufgebracht wird.

8. Verfahren nach den Patentansprüchen 1 bis 7, dadurch gekennzeichnet, dass mit Kohlenstoffasern gefüllte Thermoplaste bestrahlt werden.

9. Verfahren nach den Patentansprüchen 1 bis 8, dadurch gekennzeichnet, dass der bestrahlte thermoplastische Kunststoff mit einem Verfahren aus der Gruppe Extrudieren, Walzen, Gesenkpressen, Spritzgiessen geformt wird.

10. Verfahren nach den Patentansprüchen 1 bis 9, dadurch gekennzeichnet, dass mehrere aus bestrahltem thermoplastischem Kunststoff hergestellte Formlinge zu einem Körper verbunden werden und der Körper carbonisiert wird.

11. Verfahren nach den Patentansprüchen 1 bis 10, dadurch gekennzeichnet, dass die Formlinge durch Ultraschall- oder Vibrationsschweissen verbunden werden.

## Claims

1. Process for the production of vitreous carbon bodies from thermoplasts which have been converted before the carbonisation into a heat resistant form, characterised in that aromatic group-containing thermoplasts in the form of bulk powder or granulate are thermally stabilised with an iniosing radiation, the irradiated material is shaped into bodies and the bodies are carbonised by heating in an inert atmosphere.

2. Process according to claim 1, characterised in that there is used a thermoplast from the group polyphenyleneoxide, polysulphone, polyethersulphone, polyetheretherketone.

3. Process according to claims 1 and 2, characterised in that granulate particles with a diameter of at most 5 mm and a variance in diameter of at the most 30% are used.

4. Process according to claims 1 to 3, characterised in that the bulk material is turned over.

5. Process according to claims 1 to 4, characterised in that the powder or granulate bulk material is irradiated with beta-rays.

6. Process according to claims 1 to 5, characterised in that the powder or granulate bulk material is irradiated with a dose of 0.5 to 1.5 MJ/kg.

7. Process according to claims 1 to 6, characterised in that the irradiation dose is applied in stages.

8. Process according to claims 1 to 7, characterised in that thermoplasts filled with carbon fibres are irradiated.

9. Process according to claims 1 to 8, characterised in that the irradiation thermoplasts are shaped by a process from the group extruding, rolling, die pressing, injection moulding.

10. Process according to claims 1 to 9, characterised in that several shaped blanks produced from irradiated thermoplasts are joined to form one body and the body is carbonised.

11. Process according to claims 1 to 10, characterised in that the shaped blanks are connected by ultrasonic or vibration welding.

## Revendications

1. Procédé pour obtenir des pharticules de Carbone vitreux à partir de substances thermoplastiques qui, préalablement à la carbonisation, ont été amenées à une forme stable thermiquement, caractérisé en ce que les matières plastiques thermoplastiques contenant des groupes aromatiques sous la forme de vrac pulvérulent ou granuleux sont stabilisées thermiquement par irradiation avec un rayonnement ionisant, le matériau irradié et façonné en un solide et les corps solides sont carbonisés par chauffage en atmosphère inerte.

2. Procédé selon la revendication 1, caractérisé en ce qu'une matière thermoplastique, choisie dans le groupe des polyphénylène oxydes, des polysulfones, des polyéthersulfones, des polyéther éthercétones, est utilisée.

3. Procédé selon les revendications 1 et 2, caractérisé en ce que l'on utilise des grains de granulé ayant un diamètre de 5 mm au plus et une variance du diamètre de 30% au plus.

4. Procédé selon les revendications 1 à 3, caractérisé en ce que la couche de vrac est bouleversée.

5. Procédé selon les revendications 1 à 4, caractérisé en ce que la couche de vrac pulvérulent ou granuleux est irradiée par des rayons beta.

6. Procédé selon les revendications 1 à 5, caractérisé en ce que la couche de vrac pulvérulent ou granuleux est irradiée avec une dose allant de 0,5 à 1,5 MJ/kg.

7. Procédé selon les revendications 1 à 6, caractérisé en ce que la dose d'irradiation est appliquée graduellement.

8. Procédé selon les revendications 1 à 7, caractérisé en ce que les substances thermoplastiques garnies de fibres de Carbone sont irradiées.

9. Procédé selon les revendications 1 à 8, caractérisé en ce que la matière plastique thermoplastique irradiée est façonnée au moyen d'un procédé choisi dans le groupe qui consiste en l'extrusion, le laminage, la presse à estampage et le moulage par injection.

10. Procédé selon les revendications 1 à 9, caractérisé en ce que plusieurs moulages obtenus à partir des matières plastiques thermoplastiques irradiées sont assemblés en un solide et que ce solide est carbonisé.

11. Procédé selon les revendications 1 à 10, caractérisé en ce que les moulages sont assemblés par soudage aux ultra-sons ou par vibration.